# EUROPÄISCHE PATENTANMELDUNG

(11) **EP 1 372 091 A2**
(43) Veröffentlichungstag der Anmeldung: **17.12.2003**
(21) Anmeldenummer: 02027078.1
(22) Anmeldetag: 03.12.2002
(51) Int. Cl.: G06F 17/60

(54) **Computersystem zum Überwachen von Projekten**

(30) Priorität: 12.06.2002 DE 10226137
(71) Anmelder: Siemens Gebäudesicherheit GmbH & Co. OHG, 80930 München (DE)
(72) Erfinder: Treffinger, Diane, 76228 Karlsruhe (DE)
(74) Vertreter: Berg, Peter, Dipl.-Ing.

(57) **Zusammenfassung**

Bisher müssen zum Überwachen von Projekten mehrere Datenquellen und Datenverarbeitungsprogramme zur Auswertung herangezogen und zusammengetragene Informationen (Text, Zahlen, Graphik) aufbereitet werden, um den aktuellen Projektstatus erläutern zu können.

Erfindungsgemäß wird ein Computersystem (10) zum Überwachen von Projekten vorgeschlagen mit Eingabevorrichtungen (12,20,32) für die manuelle Eingabe von Projektdaten in vorgegebenen Formaten, für die Eingabe von betriebswirtschaftlichen Daten aus einer externen Kostenrechnungseinrichtung und für die Eingabe von Steuerdaten, mit entsprechenden Speichern (18,26,30) und mit einer Anzeigevorrichtung (34) , die in Abhängigkeit von den Steuerdaten vorgegebene Ansichten generiert.

## Beschreibung

Die Erfindung bezieht sich auf ein Computersystem zum Überwachen von Projekten.

Ein strukturiertes und koordiniertes Projektreporting ist eine Herausforderung für das Projekt- bzw. Forschungs- und Entwicklungscontrolling. Projektcontroller oder Projektleiter sehen sich mit der Frage konfrontiert, wie Projekte, besonders im Investitionsgüterbereich mit entsprechend hohem technologischen Anspruch, großem Volumen und meist mehrjährigen Laufzeiten, verständlich und kommunizierbar gemacht werden. Sie sind dafür verantwortlich, regelmäßig und möglichst ohne größeren administrativen Mehraufwand eine aktuelle Kommunikationsplattform zu schaffen, um über Kosten- , Leistungs-, Termin- und Budgetabweichungen argumentieren zu können. Werden die Projektverantwortlichen nach einem empfängerorientierten, formal einheitlichen und möglichst einfach aufgebauten Projektbericht gefragt, sehen sich diese bei der Erstellung eines solchen vor erhebliche Probleme gestellt.

Dafür müssen mehrere Datenquellen und Datenverarbeitungsprogramme zur Auswertung herangezogen und zusammengetragene Informationen (Text, Zahlen, Graphik) aufbereitet werden, um den aktuellen Projektstatus erläutern zu können.

So werden bisher kaufmännische und technische Daten eines Projektes von unterschiedlichen Programmen verwaltet. Das bekannte Programm SAP beispielsweise ist ein reines kaufmännisches Kostenrechnungsprogramm, welches verschiedene Module aufweist. Dabei handelt es sich beispielsweise um ein Hauptbuch für Bilanzabschlüsse und ein CO-Modul für das Controlling. Das Programm weist aus gesetzlichen Gründen nur eine geringe Flexibilität auf, beispielsweise können Informationen, über den Hintergrund von Zahlungen nur mühsam über Fließtext eingegeben werden.

Das Programm MS-Project von Microsoft wiederum verwaltet nur Termine und keine Kosten und ist somit nur auf Entwicklerebene einsetzbar.

Programme zum Qualitätsmanagement wiederum verwalten nur Dokumentationen wie beispielsweise Entwicklungspläne, Pflichtenhefte usw.

Mit dem fachspezifischen Ausgaben dieser Programme erfahren Projektcontroller und Entwickler jedoch nur wenig Unterstützung in ihrer Kommunikation.

Die am Projekt beteiligten Unternehmensbereiche berichten daher(zentrales Controlling, Produktion, usw.) unabhängig voneinander ihre Sichtweise zum Projektfortschritt. Dies hat zur Folge, dass wiederum Daten gesammelt und bereichsspezifisch aufbereitete Reports generiert werden. Das Resultat hieraus sind häufig umfangreiche Essays, die weder einen ganzheitlichen Ansatz kennen, um die Informationen für Entscheidungen abzubilden, noch zu sinnvoller Überzeugungsarbeit während des Projektablaufs befähigen.

Derzeitig besteht beim Überwachen von Projekten (Projektreporting) ein Mangel an qualifizierter Information. Projekte sind durch eine erhebliche Unsicherheit in der Vorhersage, deren Darstellung und auch von menschlichen Problemen geprägt.
Es ist daher die Aufgabe der Erfindung ein Computersystem zum Überwachen von Projekten anzugeben, welches innerhalb kürzester Zeit über das Wesentliche zum Projekt informiert und durch Visualisierung der Daten die Kommunikation fördert.

Die Aufgabe wird erfindungsgemäß gelöst durch ein Computersystem mit den Merkmalen des Anspruchs 1.

In vorteilhafter Weise werden die bereitgestellten Projektinformationen durch die Anzeigevorrichtung zu jedem Zeitpunkt der Entwicklung visualisiert, dabei ist vor allem durch den direkten Datenimport der betriebswirtschaftlichen Werte aus der Schnittstelle zum externen Kostenrechnungsprogramm die Kostentransparenz gewährleistet. Durch die integrierte Dokumentation der Projekthistorie ist auch für Termintransparenz gesorgt.

In der bevorzugten Ausgestaltung des Computersystems nach Anspruch 2 ist durch die vorgegebenen Eingabemasken sichergestellt, dass eine einheitliche Datenbasis für unterschiedliche Projekte existiert.

Durch die Schnittstelle zum Kostenrechnungsprogramm SAP R/3 gemäß Anspruch 3 werden die bei zahlreichen Unternehmen darin enthaltenen betriebswirtschaftlichen Daten mit den technischen Daten zusammengeführt, um einfach graphische Reports zu generieren.

In der bevorzugten Ausgestaltung gemäß Anspruch 4 lassen sich häufig benötigte Standardausgaben in besonders einfacher Art und Weise per Mausklick erzeugen.

Gemäß Anspruch 5 lassen sich die geplanten Budget-Kosten pro Projekt ohne großen Aufwand anzeigen, wobei auch eine Unterteilung nach einzelnen Unterbudgets gemäß Anspruch 6 vorgesehen ist, was die Übersichtlichkeit weiter erhöht.

Eine besonders beliebte Darstellung des Projektfortschritts - die sogenannte Meilenstein-Trend-Analyse lässt sich gemäß Anspruch 7 in einer vorteilhaften Ausgestaltung des Systems generieren.

Eine Übersicht über Abweichungen vom geplanten Projektverlauf ist gemäß Anspruch 8 durch die Eingabe und Anzeige dieser Abweichungen gegeben.

In vorteilhafter Weise werden die Mitglieder der Projektteams gemäß Anspruch 9 angezeigt.

Außer der Grobplanung lässt sich gemäß Anspruch 10 auch die Feinplanung in das Computersystem eingeben und wird von diesem dargestellt.

In der bevorzugten Ausgestaltung gemäß Anspruch 12 wird eine Mehrfachdatenerfassung vermieden, welche ansonsten möglicherweise zu Widersprüchen führen würde.

Um Unbefugten den Zugriff auf die Daten zu verwehren, ist gemäß Anspruch 13 in vorteilhafter Weise vorgesehen, dass die Daten verschlüsselt abgespeichert werden und nur von dazu autorisierten Personen abgerufen werden können.

Zur besseren rückblickenden Verfolgung von Projekten ist gemäß Anspruch 14 vorgesehen, dass die Daten nicht nur kumulativ oder aktuell, sondern auch im historischen Verlauf darstellbar sind.

Damit alle Nutzer immer auf die aktuellsten Kenndaten zurückgreifen können, ist es gemäß Anspruch 15 vorgesehen, dass die Kenndaten bei Neueingabe von Daten sofort aktualisiert werden und zur Verfügung stehen.

Besonders vorteilhaft ist die Ausgestaltung nach Anspruch 16, die die Anwendung des Computersystems in einem Computernetz vorsieht. Dadurch können unterschiedliche Unternehmenseinheiten u.a. auch an verschiedenen Standorten ohne Aufwand auf eine gemeinsame Datenbasis zurückgreifen.

Durch die vorteilhafte Ausgestaltung nach Anspruch 17 lassen sich unternehmensspezifische Gliederungen für die Ein- und Ausgabe der Budgets in das Computersystem integrieren, wodurch das Computersystem für unterschiedlichste Anwendungsfälle und Weiterverarbeitungen durch Exportieren der Daten geeignet ist.

Besonders wichtig für die Beurteilung des Projekterfolgs im Nachhinein ist die Darstellung der Meilenstein-Historie gemäß Anspruch 18, da dadurch die Hauptschwierigkeiten im Projektablauf leicht sichtbar werden.

Besonders häufig gebrauchte Anzeigen wie ein Plan-Ist-Vergleich, ein Entwicklungsantrag zur Beauftragung eines Projekts, eine Fortschrittsanalyse (Earned Value Analysis = EVA), besondere Kennzahlen für das Controlling, ein für die Projektsitzung ein auf der Anzeigevorrichtung einseitiger Projektstatusbericht, eine Time-to-Market-Anzeige, eine Key-Performance-Index-Anzeige (KPI), eine Cash-Flow-Anzeige und eine Riskmanagement-Anzeige lassen sich gemäß der Ansprüche 19 bis 23 sowie 27-30 besonders einfach erzeugen, da sie als Standardausgaben der Anzeigevorrichtung erzeugt werden.

Um auch für Änderungen im Controlling-Bereich gerüstet zu sein, ist es gemäß Anspruch 24 vorgesehen, dass die Recheneinheit für die Errechnung neuer Kenndaten aus den projektspezifisch technischen und den betriebswirtschaftlichen Daten einfach umprogrammierbar ist.

Eine besondere Übersichtlichkeit in der Anzeige wird dadurch erzielt, dass gemäß Anspruch 25 zusammengehörige Daten in Registern zusammengefasst dargestellt werden.

Gemäß einer weiteren vorteilhaften Ausgestaltung ist nach Anspruch 26 vorgesehen, dass eine Identifikationsnummer für das Projekt, die in der Kostenrechnungssoftware benötigt wird, in einfacher Weise durch Zuordnung des aus dem Projekt resultierenden Produkts in eine Produktgruppenzugehörigkeit erzeugt wird.

Weitere Aspekte der Erfindung ergeben sich aus den folgenden Ausführungsbeispielen, die in den Figuren der Zeichnung dargestellt sind.

Dabei zeigen
Figur 1 den schematischen Aufbau eines erfindungsgemäßen Computersystems,
Figur 2 ein schematisches Prozessdiagramm,
Figur 3 die Startmaske für die Dateneingabe und die Steuerung der Ansichten,
Figur 4 die Eingabemaske für Projektgrunddaten,
Figur 5 die Ansicht des Budgets eines Projektes,
Figur 6 die Ansicht der aktuellen Kosten des Projektes,
Figur 7 die Eingabemaske für die Basisdaten der Meilenstein-Trend-Analyse,
Figur 8 die Eingabemaske für Abweichungen,
Figur 9 die Ein- und Ausgabemaske für die Mitglieder des Projektteams,
Figur 10 die Ein- und Ausgabemaske für die Produkthierarchie, Figur 11 die Ausgabe eines Berichts über die Feinplanung Projekt-Ressourcen,
Figur 12 die Anzeige eines Projektstatusberichts: Meilenstein-Trend-Analyse und
Figur 13 die Anzeige eines Plan/Ist Vergleich Reports.

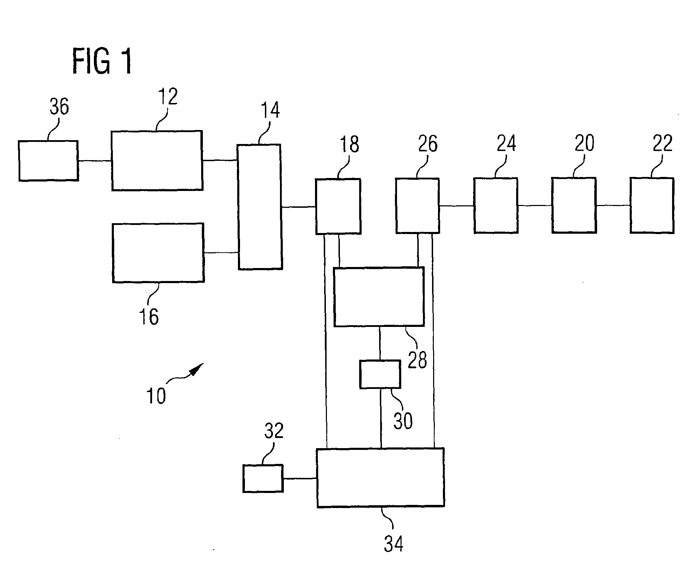

In Figur 1 ist schematisch ein erfindungsgemäßes Computersystem 10 gezeigt, welches eine erste Eingabeeinrichtung 12 , beispielsweise eine Tastatur, zum Eingeben von Projektdaten umfasst. Die Eingabeeinrichtung 12 ist mit dem ersten Eingang einer Vergleichseinrichtung 14 verbunden, die überprüft, ob die Eingaben mit den am zweiten Eingang der Vergleichseinrichtung 14 anliegenden vorgegebenen Formaten 16 übereinstimmen. Falls die Übereinstimmung detektiert wird, werden die Daten in einem ersten Speicher 18 abgespeichert. Weiterhin ist eine zweite Eingabeeinrichtung 20 vorgesehen, die als Schnittstelle zu einer externen Kostenrechnungseinrichtung, beispielsweise ein SAP R/3-System 22, fungiert. Mithilfe einer Abfrageeinrichtung 24 werden betriebswirtschaftliche Daten aus der externen Kostenrechnungseinrichtung 22 abgerufen und in einem zweiten Speicher 26 abgespeichert. Eine Recheneinheit 28 berechnet aus den im ersten und im zweiten Speicher 18,26 abgespeicherten Daten Kenndaten des Projektes, die in einem dritten Speicher 30 abgespeichert werden. Ferner ist eine dritte Eingabeeinrichtung 32, beispielsweise eine Tastatur oder eine Computermaus, zur Eingabe von Steuerdaten vorgesehen, die für die Steuerung von Ansichten auf der Anzeigevorrichtung 34 genutzt werden.

Zum Bilden von Eingabemasken auf der ersten Eingabeeinrichtung 12 ist eine Maskenbildungseinrichtung 36 vorgesehen. Diese unterstützt die Eingabe von Daten in vordefinierten Formaten.

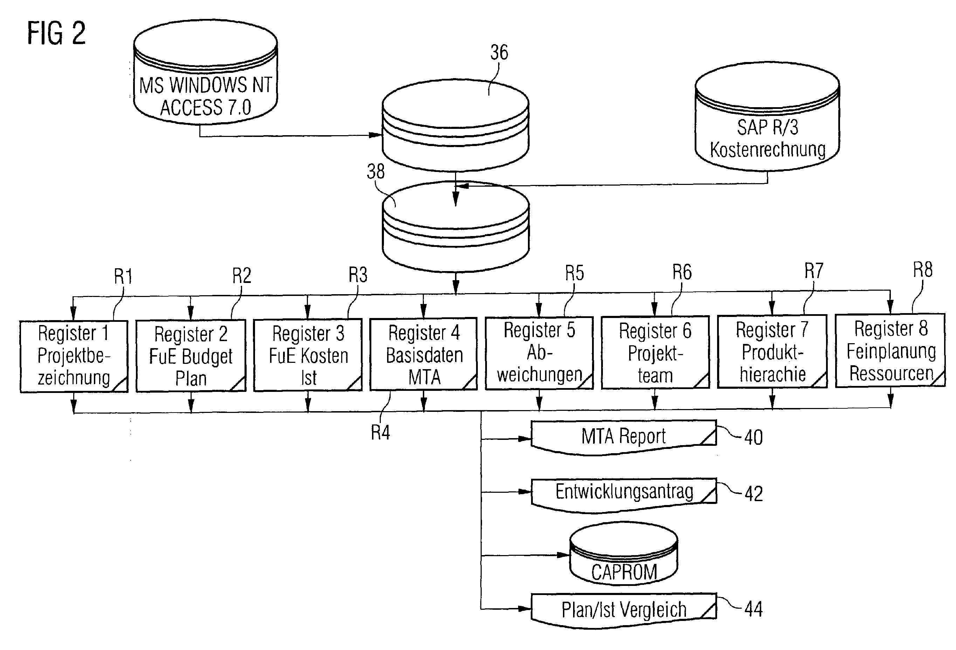

In Figur 2 ist das dazugehörige Prozessdiagramm dargestellt. Eine Datenbank 36, die den ersten Speicher 18, den zweiten Speicher 26 und den dritten Speicher 30 umfasst, arbeitet über Betriebssysteme und Anwendungsprogramme wie beispielsweise die bekannten Windows NT und MS Access 7.0, sowie über eine Schnittstelle zu einem SAP R/3-System zusammen. Zu diesen Daten können weitere Daten eingegeben werden 38, wobei insgesamt acht Register vorgesehen sind. Ein erstes Register R1 für die Grunddaten des Projektes, ein zweites Register R2 für die Budget-Planung, ein drittes Register R3 für die aktuellen Ist-Kosten des Projektes, ein viertes Register R4 für die Basisdaten der Meilenstein-Trend-Analyse, ein fünftes Register R5 für Abweichungen vom Projektverlauf, ein sechstes Register R6 für die Mitglieder des Projektteams, ein siebtes Register R7 für eine Produkthierarchie und ein achtes Register R8 für die Feinplanung der Ressourcen. Als Ausgabemöglichkeiten sind beispielsweise Standardausgaben wie ein Meilenstein-Trend-Analyse Report 40, ein Entwicklungsantrag 42 und ein Plan/Ist-Vergleich 44 oder auch - nicht dargestellt - eine Fortschrittsanalyse (Earned Value Added = EVA) vorgesehen sowie eine Schnittstelle zu einem externen Projektabwicklungstool CAPROM (Computer Assisted Project Management). Im Projektabwicklungstoll CAPROM werden u.a. technische Freigaben verwaltet.

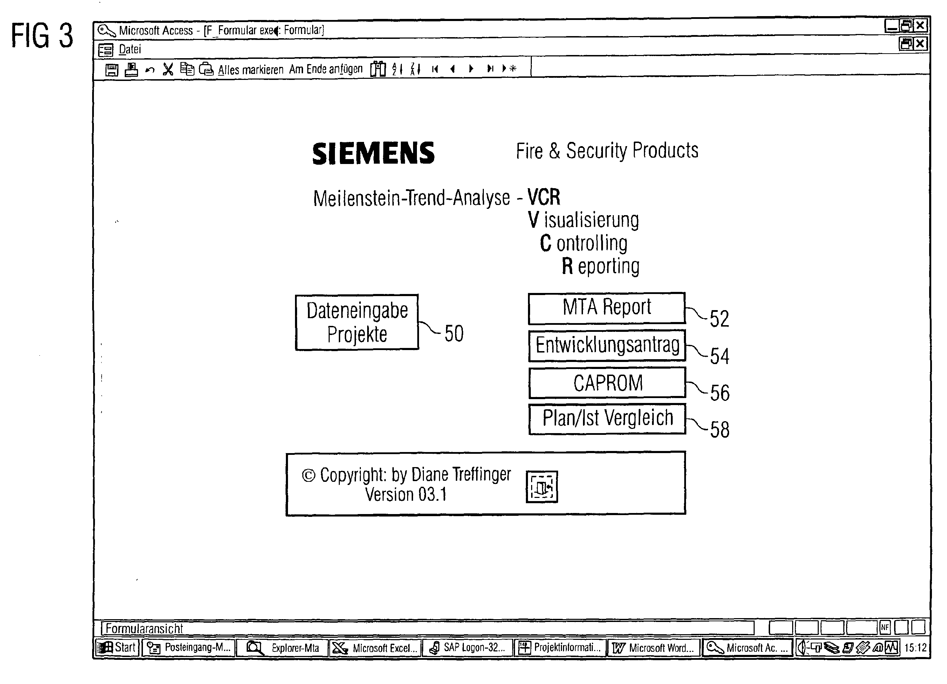

In Figur 3 ist die Start-Eingabemaske dargestellt, dabei können Daten zu bereits existierenden Projekten eingegeben werden 50, oder standardisierte Ansichten zu ausgewählten Projekten ausgegeben werden, z.B. der Meilenstein-Trend-Analyse Report 52, ein bereits ausgefüllter Entwicklungsantrag 54, eine Weiterberarbeitung mittels des Tools CAPROM 56 zur Erzeugung HTML-fähiger Berichte bzw. zur Gesamtübersicht/Abbildung aller technischen und kaufmännischen Projektstände und die Anzeige eines klassischen Plan/Ist-Vergleichs für alle Projekte 58.

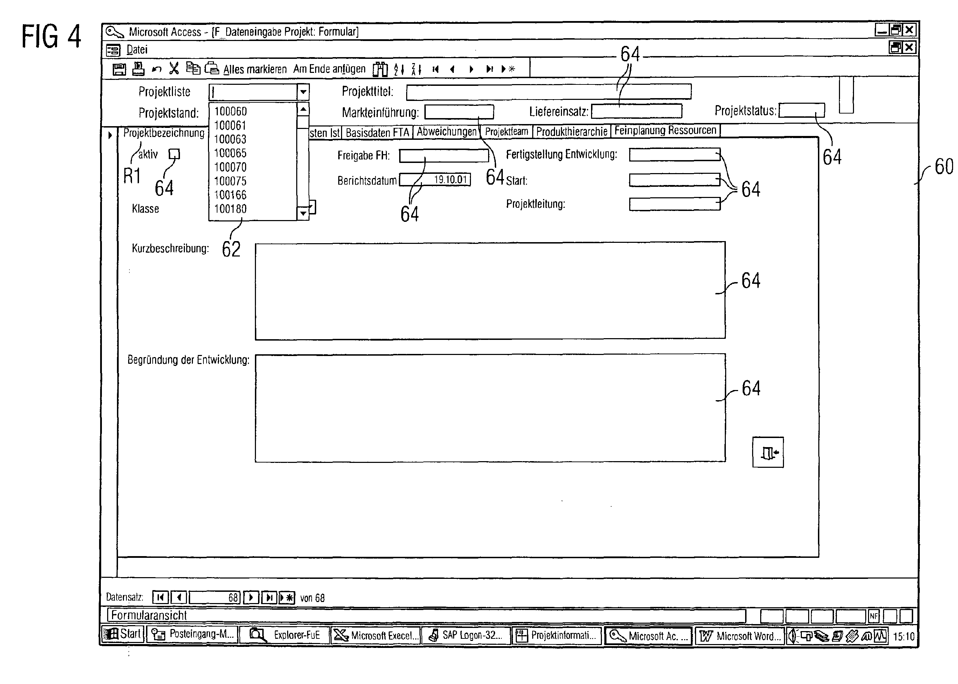

In Figur 4 ist eine Eingabemaske und Ansicht 60 von Projektgrunddaten dargestellt. Dabei werden nach Auswahl eines Projektidentifikationszeichens in der Projektliste 62 automatisch der Projekttitel 64 und alle zum Projekt gehörigen Grunddaten wie z.B. Start, Projektleitung, Kurzbeschreibung, Begründung der Entwicklung, Freigabedatum, Berichtsdatum usw. angezeigt. Die Daten können durch Eingabe von geänderten Daten auch modifiziert werden.

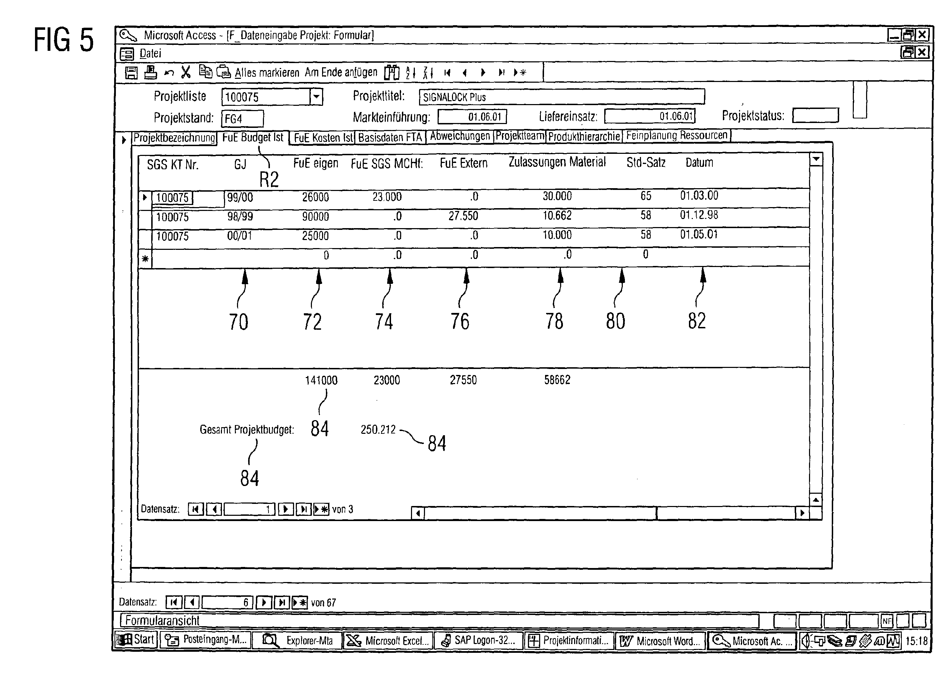

In Figur 5 ist das zweite Register R2, die Anzeige des geplanten Budgets, dargestellt. Dabei sind die Kosten untergliedert in Geschäftsjahr 70, Kosten der eigenen Kostenstelle 72, Kosten aus Peripherie-Kostenstellen 74, Kosten externer Dienstleister 76, Kosten für Zulassungen und Materialien 78, Hinterlegung des Stundensatzes der eigenen Kostenstelle 80 und Hinterlegung des Eingabedatums zum Datensatz 82. In einem weiteren Feld wird das daraus errechnete Gesamtbudget 84 angezeigt. Die Kosten lassen sich dabei zu unternehmensspezifischen Gruppen zusammenfassen und anzeigen, wodurch die Lesbarkeit erleichtert wird.

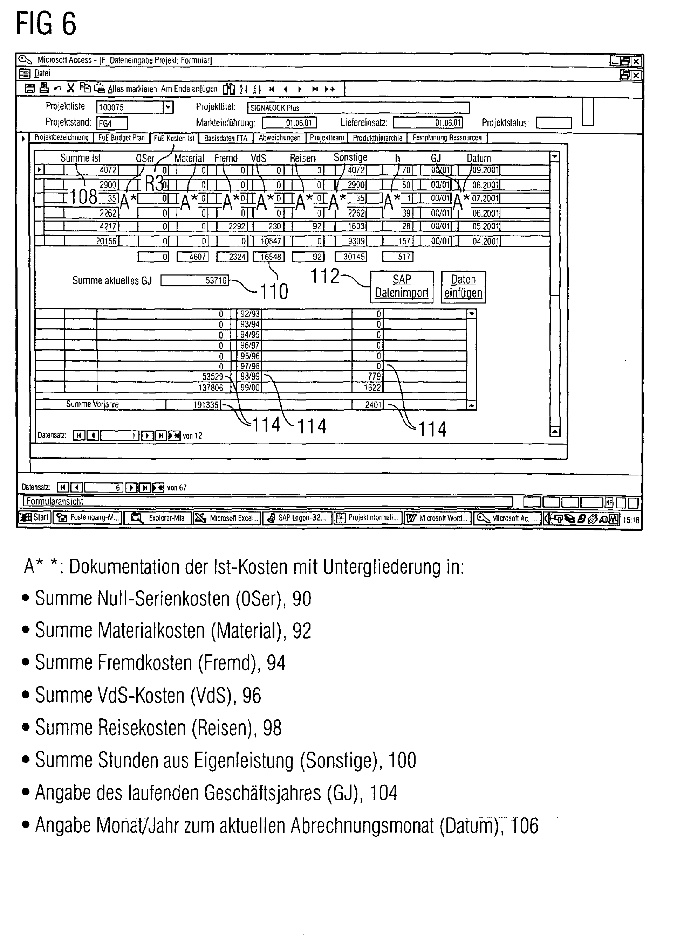

Figur 6 zeigt das dritte Register R3 der Ist-Kosten mit einer Untergliederung in Summe der Null-Serienkosten 90, Summe der Materialkosten 92, Summe der Fremdkosten 94, Summe von VdS-Kosten 96, Summe Reisekosten 98, Summe Kosten aus Eigenleistung 100, Summe Stunden Eigenleistung 102, Angabe des laufenden Geschäftsjahrs 104 und Angabe des Monats und Jahrs zum aktuellen Abrechnungsmonat 106. Dabei ist eine automatische Summenbildung für den aktuellen Monat 108 und für das aktuelle Geschäftsjahr 110 vorgesehen. Über eine Schnittstelle 112 zum SAP R/3-System werden die gewünschten Monatswerte automatisch ausgelesen. Außerdem ist eine Summierung 114 über Kosten in bereits abgelaufenen Geschäftsjahren vorgesehen. Auch hier lassen sich die Kosten zu unternehmensspezifischen Gruppen zusammenfassen.

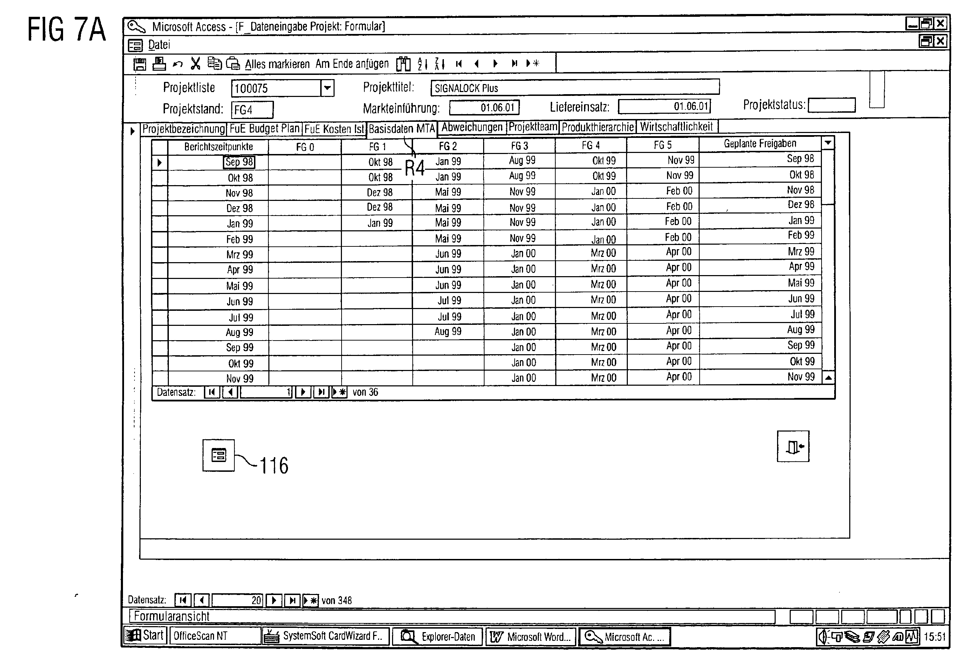

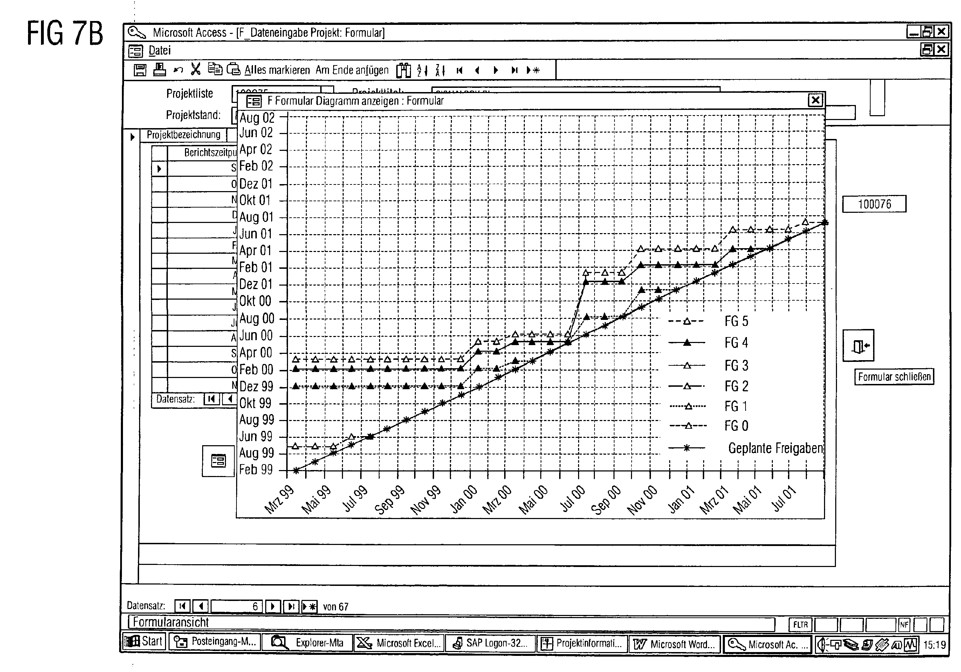

In Figur 7a ist das vierte Register R4 zur Eingabe der Basisdaten für die Meilenstein-Trend-Analyse dargestellt. Dabei werden monatlich tabellarisch die geplanten Meilensteine und die Modifikationen des zeitlichen Verlaufs von Freigabezeitpunkten FG0,...,FG5 (technischer Projekterfüllungsgrad) eingegeben. Über einen Eingabe-Button 116 wird dann automatisch das entsprechende Formular graphisch dargestellt (Fig. 7b).

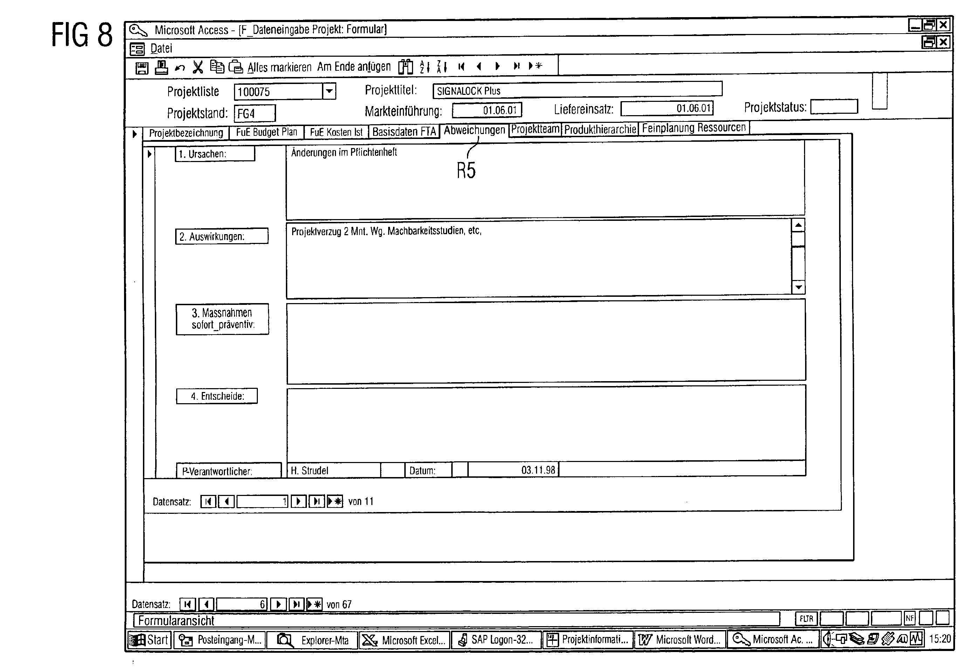

In Figur 8 ist das fünfte Register R5 zur Eingabe von Abweichungen je Terminabweichung einschließlich Begründung und Auswirkungen dargestellt. Die Begründung wird dabei bereits vorstrukturiert eingegeben in Ursache, Auswirkung, Maßnahmen (sofort/präventiv), Entscheide, Projektverantwortlicher und Eingabedatum.

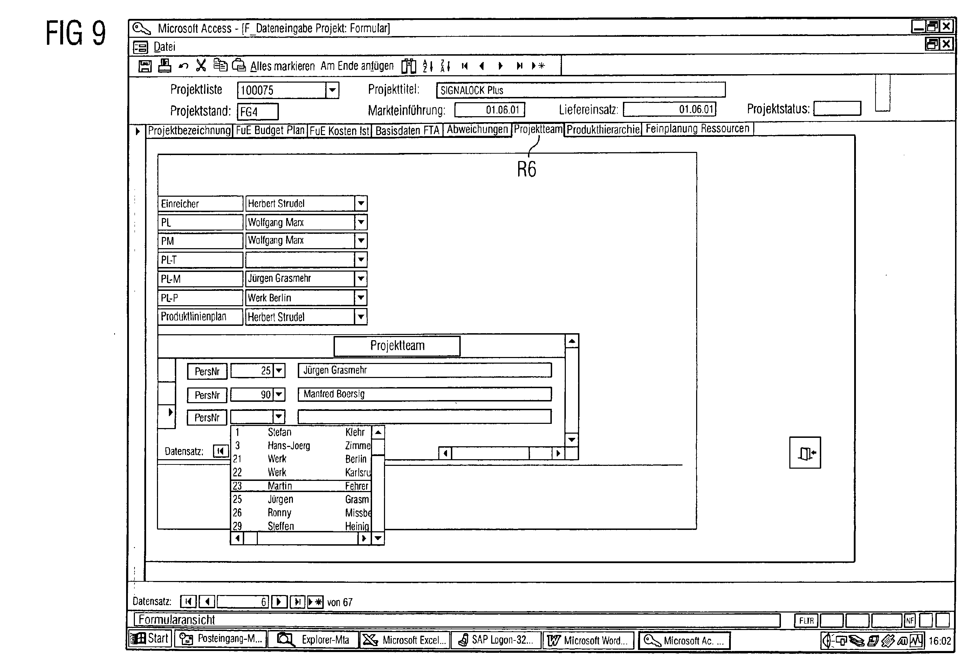

Figur 9 zeigt das sechste Register R6 zur Eingabe der Projektteammitglieder. Dabei werden die Projektverantwortlichen wie Einreicher, Projektleiter, Produktmanager, Projektleiter-Technik, Projektleiter-Markt, Projektleiter-Produktion, Produktlinienplanung eingegeben.

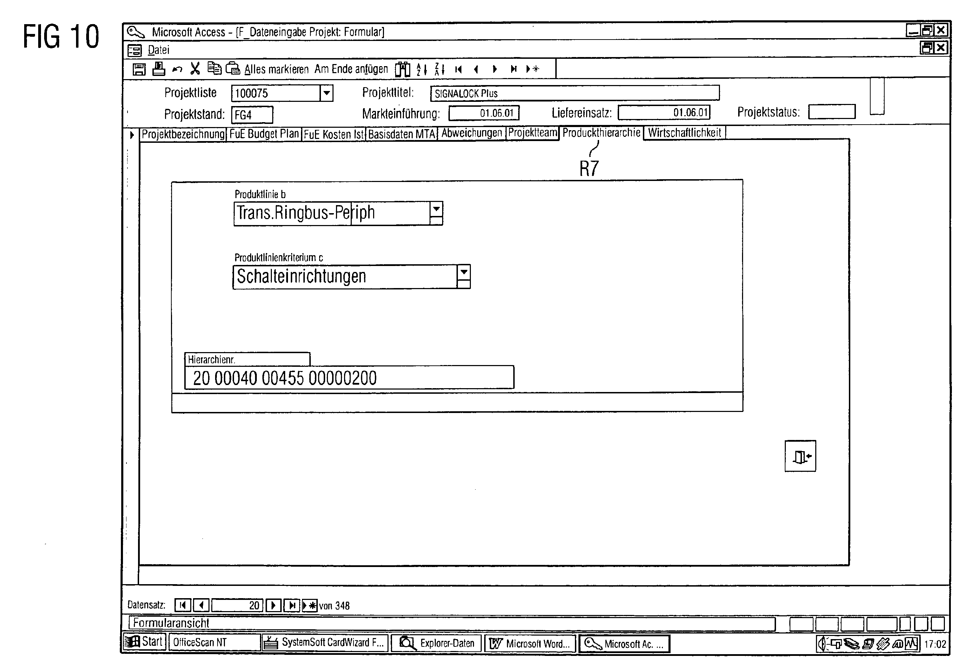

Über das in Figur 10 gezeigte siebte Register R7 werden Produkthierarchien berücksichtigt, um für Abrechnungszwecke im Kostenrechnungsprogramm Produkthierarchie-Nummern zu erzeugen, indem die aus dem Projekt resultierenden Produkte zu Produktgruppenzugehörigkeiten zugeordnet werden.

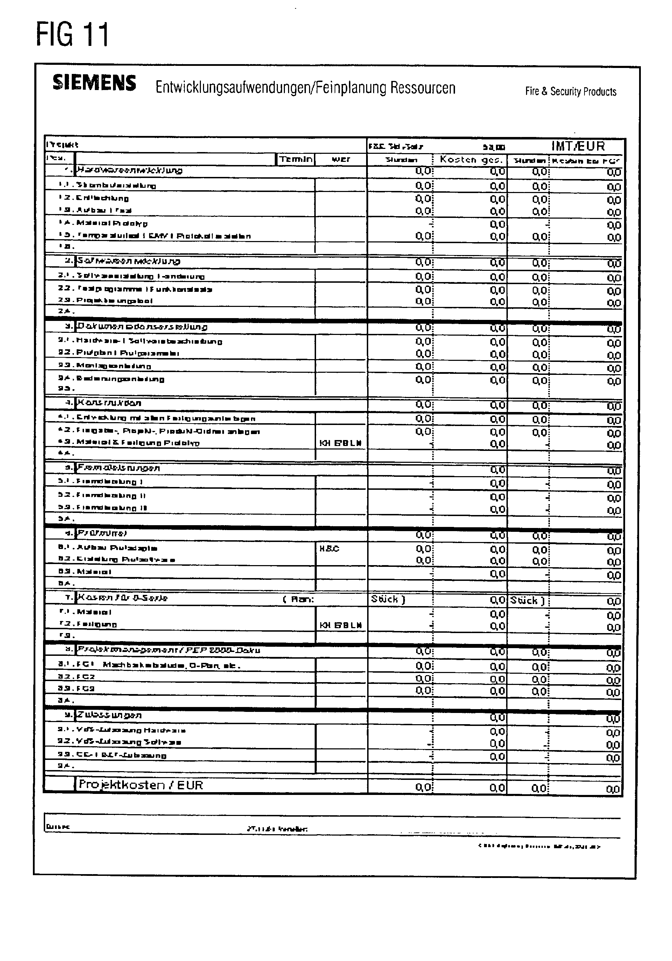

In Figur 11 ist eine beispielhafte Ansicht eines Berichts über die Feinplanung Projekt-Ressourcen dargestellt, wie sie anhand der abgespeicherten Projektdaten automatisch erzeugt wird.

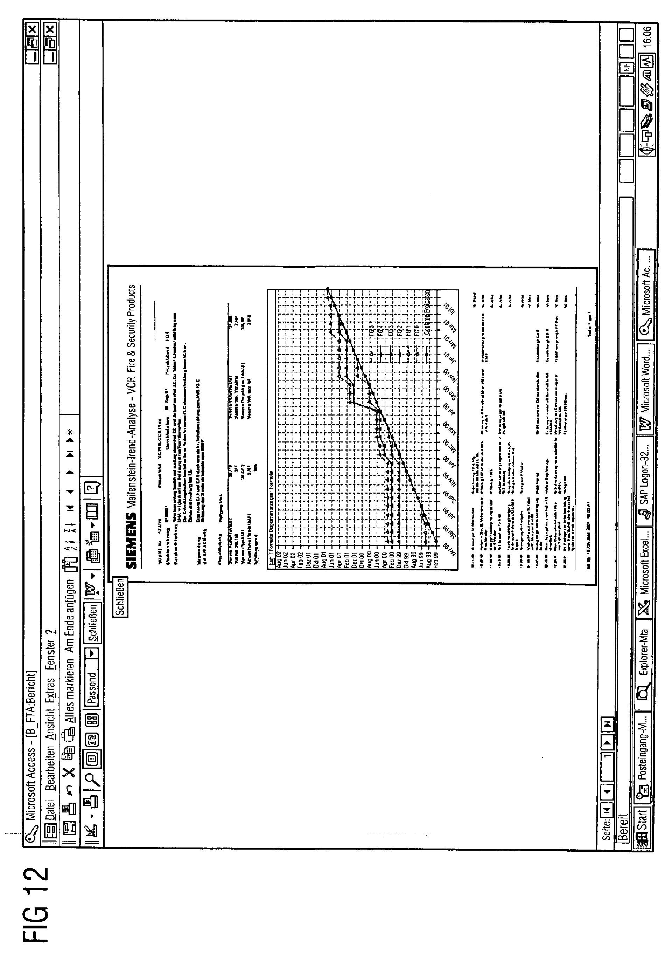

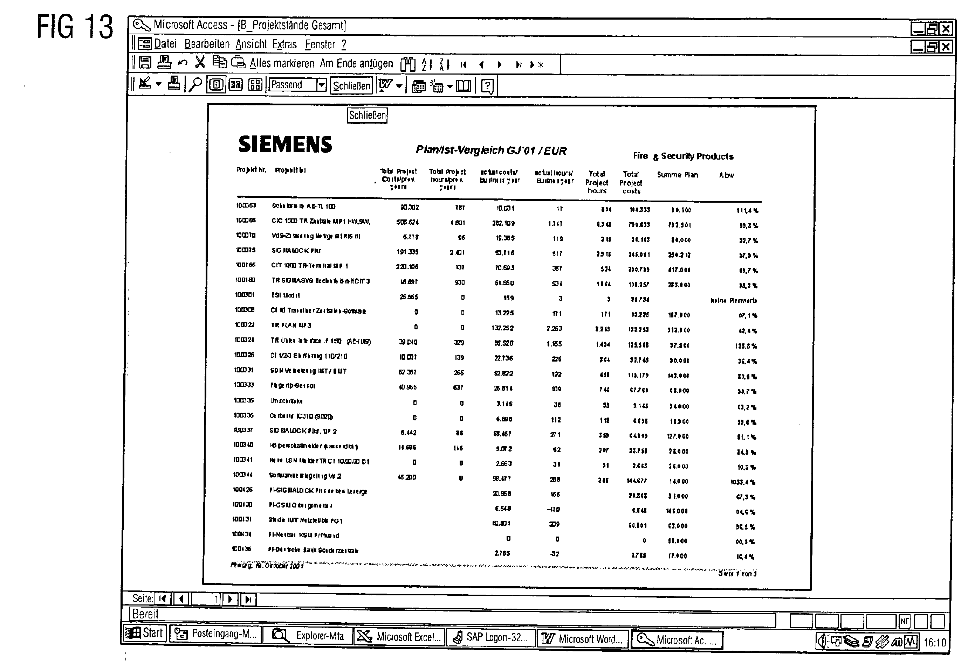

Die Figuren 12 und 13 zeigen beispielhafte Standardausgaben für die Ausgabe von Meilenstein-Trend-Analyse-Reports und für einen Plan/Ist Vergleich Report.

Darüber hinaus sind Standardausgaben und ggf. Register für Cash-Flow-Analysen und entsprechende Anzeigen, für Key-Performance-Index-Analysen und entsprechende Anzeigen, für Riskmanagement-Analysen und -Anzeigen und für Time-to-Market-Anzeigen vorgesehen. Letztere sind als Farbsymbole (beispielsweise rot: Verzug, gelb: Verzug droht, grün: ohne Verzug, entspricht den Farben einer Straßenverkehrs-Ampel) ausgeführt, die ständig bei Bearbeitung eines Projektes angezeigt werden.

Das erfindungsgemäße Computersystem wird bevorzugt in Computernetzen eingesetzt, um möglichst vielen unterschiedlichen Unternehmensbereichen und Personen einen Zugriff auf die Daten zu ermöglichen. Dabei ist vorgesehen, dass die Daten nur von dazu autorisierten Personen aufgerufen werden dürfen, beispielsweise dürfen nur Kaufleute die wirtschaftlichen Daten verändern.

Durch das erfindungsgemäße Computersystem lassen sich zentral alle Projekte eines Unternehmensbereich kontrollieren. Auch Kundenprojekte können entsprechend in das Computersystem eingespeist werden.

## Patentansprüche

1. Computersystem (10) zum Überwachen von Projekten
mit einer ersten Eingabeeinrichtung (17) zum manuellen Eingeben von projektspezifischen technischen Daten,
mit einer Vergleichseinrichtung (14) zum Vergleichen der Formate von eingegebenen projektspezifischen technischen Daten mit vorgegebenen Formaten (16),
mit einem ersten Speicher (18) zum Abspeichern der in vorgegebenen Formaten eingegebenen projektspezifischen Daten, mit einer zweiten Eingabevorrichtung (20), die mit einer externen Kostenrechnungseinrichtung (22) für betriebswirtschaftliche Daten verbunden ist,
mit einer Abfrageeinrichtung (24) zum Abfragen betriebswirtschaftlicher Daten des Projektes über die zweite Eingabevorrichtung (20) aus der externen Kostenrechnungseinrichtung (22),
mit einem zweiten Speicher (26) zum Abspeichern der abgefragten betriebswirtschaftlichen Daten,
mit einer Recheneinheit (28) zum Berechnen von Kenndaten des Projektes aus den abgespeicherten projektspezifischen und betriebswirtschaftlichen Daten,
mit einer dritten Eingabevorrichtung (32) zum Eingeben von Steuerdaten und
mit einer Anzeigevorrichtung (34) zum Anzeigen der abgespeicherten projektspezifischen technischen und/oder der betriebswirtschaftlichen und/oder der Kenndaten des Projektes in Abhängigkeit von den eingegebenen Steuerdaten.

2. Computersystem (10) nach Anspruch 1,
**dadurch gekennzeichnet, dass**
eine Maskenbildungseinrichtung (36) vorgesehen ist zum Bilden von Eingabemasken auf der ersten Eingabevorrichtung.

3. Computersystem (10) nach einem der Ansprüche 1 oder 2,
**dadurch gekennzeichnet, dass**
die zweite Eingabevorrichtung (20) als Schnittstelle zu SAP R/3 als externer Kostenrechnungseinrichtung (22) ausgebildet ist.

4. Computersystem (10) nach einem der Ansprüche 1 2 oder 3,
**dadurch gekennzeichnet, dass**
die dritte Eingabevorrichtung (32) als Computermaus ausgebildet ist und die Anzeigevorrichtung (34) je nach Steuerdaten eine von mehreren vorgegebenen Standardausgaben für Projektüberwachungen darstellt.

5. Computersystem (10) nach einem der Ansprüche 1 bis 4,
**dadurch gekennzeichnet, dass**
die Anzeigevorrichtung (34) derartig ausgebildet ist, dass nach Eingabe einer spezifischen Projektidentifikationsnummer in die dritte Eingabevorrichtung (32) ein zu dieser Projektidentifikationsnummer gehörendes Budget angezeigt wird.

6. Computersystem (10) nach Anspruch 5,
**dadurch gekennzeichnet, dass**
das Budget in individuell vorgebbare Unterbudgets aufgegliedert werden kann und die Anzeigevorrichtung (34) derartig ausgebildet ist, dass das Budget nach den einzelnen Unterbudgetsgegliedert angezeigt wird.

7. Computersystem (10) nach einem der Ansprüche 1 bis 6,
**dadurch gekennzeichnet, dass**
die Anzeigevorrichtung (34) derartig ausgebildet ist, dass eine zu festen Zeitpunkten vorgesehene tabellarische Eingabe von Meilensteinen und Anpassung von Freigabezeitpunkten für einzelne Projektschritte in die erste Eingabeeinrichtung (12) dazu führt, dass anschließend eine Meilenstein-Trend-Analyse als Darstellung entsprechend angepasst dargestellt wird.

8. Computersystem nach einem der Ansprüche 1 bis 7,
**dadurch gekennzeichnet, dass**
eine vorgegebene Eingabemaske der ersten Eingabeeinrichtung (12) für Abweichungen vom geplanten Projektablauf vorgesehen ist, wobei nach Eingabe dieser Abweichungen diese auf der Anzeigevorrichtung (34) dargestellt werden.

9. Computersystem (10) nach einem der Ansprüche 1 bis 8,
**dadurch gekennzeichnet, dass**
eine vorgegebene Eingabemaske für Personen des Projektteams vorgesehen ist, wobei nach Eingabe dieser Personen diese auf der Anzeigevorrichtung (34) dargestellt werden.

10. Computersystem (10) nach einem der Ansprüche 1 bis 9,
**dadurch gekennzeichnet, dass**
eine vorgegebene Eingabemaske für die Eingabe der Feinplanung von Meilensteinen und Ressourcen vorgesehen ist, wobei nach Eingabe dieser Feinplanung diese auf der Anzeigevorrichtung (34) dargestellt wird.

11. Computersystem (10) nach einem der Ansprüche 1 bis 10, **gekennzeichnet durch**
eine Schnittstelle zu einem Computer Assisted Project Management (CAPROM) Programm.

12. Computersystem (10) nach einem der Ansprüche 1 bis 11,
**dadurch gekennzeichnet, dass**
die erste Eingabeeinrichtung (12) derartig ausgestaltet ist, dass zu einem Projekt keine Mehrfachdatenerfassung zugelassen ist.

13. Computersystem (10) nach einem der Ansprüche 1 bis 12,
**dadurch gekennzeichnet, dass**
die Anzeigevorrichtung (34) derartig ausgestaltet ist, dass die Daten nur von autorisierten Personen entschlüsselt abgerufen werden können.

14. Computersystem (10) nach einem der Ansprüche 1 bis 13,
**dadurch gekennzeichnet,**
**dass** die Anzeigevorrichtung (34) derartig ausgestaltet ist, dass die abgespeicherten projektspezifischen technischen und/oder die betriebswirtschaftlichen und/oder die Kenndaten des Projektes im historischen Ablauf darstellbar sind.

15. Computersystem (10) nach einem der Ansprüche 1 bis 14,
**dadurch gekennzeichnet,**
**dass** die Recheneinheit (28) dafür sorgt, dass die Kenndaten beim Eingeben neuer projektspezifischer technischer und/oder betriebswirtschaftlicher Daten sofort aktualisiert werden.

16. Computersystem (10) nach einem der Ansprüche 1 bis 15,
**dadurch gekennzeichnet,**
**dass** in einem Computernetz mehrere erste Eingabeeinrichtungen (12) und mehrere Anzeigevorrichtungen (34) vorgesehen sind, die über das Computernetz mit den weiteren Komponenten verbunden sind.

17. Computersystem (10) nach einem der Ansprüche 1 bis 16,
**dadurch gekennzeichnet,**
**dass** die erste Eingabeeinrichtung (17) und die Anzeigevorrichtung (34) derartig ausgebildet sind, dass eine unternehmensspezifische Gliederung eines geplanten und einen tatsächlichen Budgets für das Projekt ein- bzw. ausgebbar sind.

18. Computersystem (10) nach Anspruch 10,
**dadurch gekennzeichnet**,
die Anzeigevorrichtung (34)derartig ausgestaltet ist, dass eine Historie der Meilensteine darstellbar ist.

19. Computersystem nach einem der Ansprüche 1 bis 18,
**dadurch gekennzeichnet,**
**dass** eine Standardausgabe der Anzeigevorrichtung (34) ein Plan-Ist-Vergleich ist.

20. Computersystem nach einem der Ansprüche 1 bis 19,
**dadurch gekennzeichnet,**
**dass** eine Standardausgabe der Anzeigevorrichtung (34) ein Entwicklungsantrag ist.

21. Computersystem nach einem der Ansprüche 1 bis 20,
**dadurch gekennzeichnet,**
**dass** eine Standardausgabe der Anzeigevorrichtung (34) ein auf der Ausgabevorrichtung (34) einseitiger Projektstatusbericht ist.

22. Computersystem nach einem der Ansprüche 1 bis 21,
**dadurch gekennzeichnet,**
**dass** eine Standardausgabe der Anzeigevorrichtung (34) eine Fortschrittsanalyse (EVA) ist.

23. Computersystem nach einem der Ansprüche 1 bis 22,
**dadurch gekennzeichnet,**
**dass** eine Standardausgabe der Anzeigevorrichtung (34) die Kennzahlen für ein Controlling enthält.

24. Computersystem nach einem der Ansprüche 1 bis 23,
**dadurch gekennzeichnet,**
**dass** die Recheneinheit (28) zum Errechnen von neuen Kennwerten für das Projekt-Controllling umprogrammierbar ausgestaltet ist.

25. Computersystem nach einem der Ansprüche 1 bis 24,
**dadurch gekennzeichnet,**
**dass** die Anzeigevorrichtung (34) derartig ausgestaltet ist, dass zusammengehörige projektspezifisch technische und/oder betriebswirtschaftliche und/oder Kenndaten in Registern zusammengefasst dargestellt werden.

26. Computersystem nach einem der Ansprüche 1 bis 25,
**dadurch gekennzeichnet,**
**dass** die Anzeigevorrichtung (34) derartig ausgestaltet ist, dass eine Identifikationsnummer des Projekts für die Kostenrechnungssoftware bei Eingabe einer Produktgruppenzugehörigkeit in die erste Eingabevorrichtung (12) automatisch generiert wird.

27. Computersystem nach einem der Ansprüche 1 bis 26,
**dadurch gekennzeichnet,**
**dass** eine Standardausgabe der Anzeigevorrichtung (34) eine Time-to-Market-Anzeige ist.

28. Computersystem nach einem der Ansprüche 1 bis 27,
**dadurch gekennzeichnet,**
**dass** eine Standardausgabe der Anzeigevorrichtung eine Cash-Flow-Anzeige ist.

29. Computersystem nach einem der Ansprüche 1 bis 28,
**dadurch gekennzeichnet,**
**dass** eine Standardausgabe der Anzeigevorrichtung eine Key-Performance-Index-Anzeige ist.

30. Computersystem nach einem der Ansprüche 1 bis 29,
**dadurch gekennzeichnet,**
**dass** eine Standardausgabe der Anzeigevorrichtung ein Riskmanagement-Anzeige ist.
